# EUROPÄISCHE PATENTANMELDUNG

(11) **EP 1 649 999 A2**
(43) Veröffentlichungstag der Anmeldung: **26.04.2006**
(21) Anmeldenummer: 05022660.4
(22) Anmeldetag: 18.10.2005
(51) Int. Cl.: B29C 45/14

(54) **Verfahren zur Herstellung eines formstabilen, mit einem textilen Flächengebilde, insbesondere einer Faserverbundstruktur überzogenen Gegenstands**

(30) Priorität: 21.10.2004 DE 102004051334
(71) Anmelder: Fuchs, Christian, 90762 Fürth (DE)
(72) Erfinder: Fuchs, Christian, 90762 Fürth (DE)
(74) Vertreter: Blaumeier, Jörg

(57) **Zusammenfassung**

Verfahren zur Herstellung eines formstabilen, mit einem textilen Flächengebilde, insbesondere einer Faserverbundstruktur überzogenen Gegenstands, wobei anhand wenigstens eines textilen Flächengebildes und einem aushärtbaren Matrixwerkstoff eine dünne formstabile Textilstruktur gebildet wird, die anschließend mit einer aushärtenden Formmasse in einem Spritzgussverfahren hinterspritzt wird.

## Beschreibung

Die Erfindung betrifft ein Verfahren zur Herstellung eines formstabilen, mit einem textilen Flächengebilde, insbesondere einer Faserverbundstruktur überzogenen Gegenstands.

Textile Flächengebilde, auch technische Textilien genannt, werden in unterschiedlichen Anwendungsbereichen zur mechanischen Verstärkung wie auch zur optischen Aufwertung von Funktions- und Designgegenständen verwendet, wobei ein bevorzugter Einsatzort der Automobilbau ist. Dort werden viele Zierteile verwendet, die vornehmlich mit Kohle- oder Karbonfasergeweben versehen sind. Die Gewebestruktur wird hierbei primär zu Designzwecken eingesetzt. Über einen Klarlack bleibt diese Gewebestruktur sichtbar, die optische Wirkung wird hierdurch verstärkt. Neben Karbonfaserstrukturen können aber auch andere gängige Textilgewebe wie Aramid-, Glas- und Polyestergewebe, Vliesstoffe oder andere Gelege insbesondere zu Designzwecken verwendet werden. Als im Automobilbau verwendete Gegenstände sind beispielsweise im Bereich des Armaturenbretts verwendete Zierleisten, Griffschalen im Bereich der Türöffner, Blenden im Bereich der Bedienfelder am Armaturenbrett oder aber Abdeckungen im Bereich des Schalthebels zu nennen.

Üblicherweise werden solche textil-belegten Gegenstände unter Verwendung eines Grundträgers aus Holz, Metall oder Kunststoff, an dem geeignete Befestigungsmöglichkeiten in der Regel angeklippst oder aufgeklebt sind, hergestellt. Der Grundträger wird mit dem trocknen textilen Flächengebilde überzogen und verklebt. Anschließend wird die Gewebestruktur mit einer dicken Lackschicht überzogen, geschliffen und poliert. Durch den Lackauftrag entsteht eine Tiefenwirkung bei Betrachten der Faserstruktur. Nachteilig hierbei ist, dass beim Überziehen der trocknen Faserstruktur aufgrund der notwendigen dreidimensionalen Verformung der Struktur (Drapierung) Störungen und Verschiebungen im textilen Faserwerkstoff entstehen, das heißt, das an und für sich regelmäßige Gewebe wird verzogen. Diese Störungen verstärken sich nach dem Lackauftrag deutlich und verschlechtern den optischen Eindruck des Bauteils. Ferner können die vorgegebenen Maße und durch das Design vorgegebenen Eigenschaften des Grundträgers durch das Aufbringen mehrerer zusätzlicher Schichten (Klebstoff zum Fixieren der Faserstruktur, die Faserstruktur selbst, gegebenenfalls ein Matrixharz zum Aushärten derselben sowie der Lack) nicht gewährleistet werden, was dazu führt, dass mit dem Gegenstand gekoppelte Baugruppen oder Funktionsteile beeinträchtigt werden können, oder dass sich das Teil nicht passgenau an seine Position setzen lässt.

Eine weitere bekannte Herstellungsmöglichkeit sieht vor, einen entsprechend vorgefertigten Grundträger mit einer bereits dreidimensional verformten Gewebestruktur, die unter Verwendung eines abbindenden Matrixsystems formstabil ist, zu verkleben. Hier ergibt sich das zentrale Problem, dass sowohl der Grundträger als auch die ausgehärtete, vorgefertigte Faserverbundabdeckung äußerst exakt gefertigt werden müssen, um beim Aufkleben exakt zu passen. Denn ein Offset führt zu einer minderwertigen Verbindung. Nachteilig ist auch, dass beim Auftragen der notwendigen Kleberschicht zum Verbinden der beiden Teile Lufteinschlüsse nicht verhindert werden können. Diese Einschlüsse dehnen sich bei erhöhter Temperatur gegebenenfalls aus und können die Bauteiloptik beschädigen, indem diese gegebenenfalls Blasen wirft.

Eine dritte bekannte Möglichkeit ist es schließlich, die Gewebefaserstruktur in geeigneten Fällen auch so stabil auszulegen, dass kein Grundträger mehr erforderlich ist. Das heißt, die Faserstruktur wird vollkommen eigenstabil ausgeführt und stellt letztlich den einzusetzenden Gegenstand selbst dar. In diesem Fall ist es aber erforderlich, an der Faserstruktur positionsgenau Halterungen zu platzieren und beispielsweise zu verkleben, um den Gegenstand überhaupt in seiner Endposition fixieren zu können. Dies ist nicht nur vom gesamten Herstellungsablauf, der manuell erfolgt, sehr aufwendig, auch die damit verbundenen Herstellungskosten sind hoch.

Ein weiterer Nachteil aller oben genannten Verfahren ist, dass annähernd alle Verfahrensschritte manuell erfolgen, was sich nachteilig auf die gesamten Herstellungskosten auswirkt.

Der Erfindung liegt das Problem zugrunde, ein Verfahren anzugeben, das die einfache kostengünstige Herstellung von mit textilen Geweben überzogenen Gegenständen unter Vermeidung der oben genannten Nachteile ermöglicht.

Zur Lösung dieses Problems ist bei einem Verfahren der eingangs genannten Art erfindungsgemäß vorgesehen, dass anhand wenigstens eines textilen Flächengebildes und einem aushärtbaren Matrixwerkstoff eine dünne formstabile Textilstruktur gebildet wird, die anschließend mit einer aushärtenden Formmasse hinterspritzt wird.

Erfindungsgemäß wird zunächst eine formstabile Textilstruktur, die bereits die dreidimensionale Oberflächenform des zu bildenden Gegenstands aufweist, hergestellt, indem das Flächengebilde unter Verwendung eines Matrixwerkstoffs soweit fixiert wird, dass ein Verschieben der Faserstruktur verhindert wird. Hierzu wird zweckmäßigerweise eine die Endform definierende Form verwendet, in die das Gewebe, ohne dass es wie im Stand der Technik kräftig zu spannen wäre, gelegt wird, wonach durch Zugabe des Matrixwerkstoffs eine dünne Haut oder schalenartige Textilstruktur, in der die Faserstruktur fixiert ist, gebildet wird, die aus einer oder mehreren Textillagen bestehen kann.

Anschließend wird diese Textilstruktur in einen Spritzgussprozess überführt, in dem die Rückseite der Textilstruktur, also die der Sichtseite gegenüberliegende Seite, mit einer aushärtbaren Formmasse in einem entsprechenden Spritzwerkzeug hinterspritzt wird. Die Formmasse wird also direkt in die gebildete Textilstruktur-Vorform eingespritzt, so dass sie sich optimal mit dieser verbinden kann.

Beim erfindungsgemäßen Verfahren werden zum einen die sich durch das Überziehen und Spannen ergebenden Probleme beseitigt, nachdem ein solches nicht mehr erforderlich ist. Darüber hinaus findet keine separate Verklebung von Bauteilen statt, nachdem wie beschrieben eine für die Stabilität des Gegenstands sorgende plastische Formmasse eingespritzt wird, die sich mit dem vorgeformten, oberflächenbestimmenden Teil verbindet. Es ist also kein separater Träger herzustellen, wie dies im Stand der Technik der Fall ist. Des Weiteren ist es möglich, im Rahmen dieses Spritzvorgangs unmittelbar die Befestigungselemente auszuformen, das heißt, es müssen keine separaten Befestigungselemente mehr angeklebt oder sonst wie angeordnet werden. Damit ist auch die Ausbildung komplizierter Befestigungselemente möglich. Da die vorgeformte Faserverbundstruktur direkt in den Herstellungsprozess des Gesamtbauteils integriert wird, kann dieses mit sehr hoher Maßhaltigkeit und einer ansprechenden Oberflächenoptik produziert werden. Ein weiterer beachtlicher Vorteil ist darin zu sehen, dass aufgrund der wenigen verwendeten Materialien die Ausdehnungskoeffizienten dieser Materialien aneinander angepasst werden können, so dass sich hervorragende Eigenschaften des Gesamtbauteils insbesondere im Hinblick auf Temperaturwechsel ergeben, da sich eine Reduzierung der Spannung in der Grenzschicht zwischen dem Faserverbundgewebe und dem hinterspritzten Formmaterial reduzieren lassen. Infolge der Integration in den automatisierten Spritzprozess entfallen somit auch diverse manuelle Handhabungsschritte. Damit einher geht aber auch eine Reduzierung der verwendeten Materialien bzw. der verwendeten Materialmengen, nachdem kein Kleber erforderlich ist, ferner ist weniger Lack, der nach dem Entformen auf die Sichtseite aufgebracht wird, und der anschließend geschliffen und poliert wird, zu verwenden, nachdem die Oberflächenform bereits extrem maßhaltig ist.

Die Verwendung mehrere übereinander gelegter Textilgewebelagen ermöglicht es ferner, gezielt etwaigen aus dem Ausdehnungsverhalten der verschiedenen verwendeten Materialien resultierenden Verspannungen entgegenzuwirken. Denn es können Gewebelagen aus unterschiedlichen Fasermaterialien oder -dicken übereinandergelegt werden, so dass im Gewebeschichtaufbau unterschiedliche Ausdehnungskoeffizienten in den einzelnen Schichtlagen gegeben sind. Hierdurch kann erreicht werden, dass die mit dem Matrixwerkstoff ausgehärtete Textilstruktur, die anschließend zu hinterspritzen ist, quasi vorgespannt ist, also infolge des unterschiedlichen Ausdehnungsverhaltens gerichtete, definierte inhärente Spannungen aufweist. Bewirkt nun das Hinterspritzen mit der Formmasse einen Verzug in die diesen Spannungen im wesentlichen entgegengesetzte Richtung, so wirkt die Vorspannung diesem Verzug entgegen, so dass dieser weitgehend kompensiert wird. Im fertigen Bauteil ist die geometrische Formänderung, die aus dem Spritzvorgang resultiert, damit ausgeglichen.

Die Dicke der formstabilen ein- oder mehrlagigen Textilstruktur sollte im Wesentlichen der Dicke des ein- oder mehrlagigen Flächengebildes entsprechen, das heißt, es sollte nur so viel Matrixwerkstoff wie zum Ausbilden der formstabilen Textilstruktur-Vorform unbedingt nötig verwendet werden. Nachdem der Matrixwerkstoff primär dem Fixieren der Faserverbundstruktur dient, kann mit wenig Masse gearbeitet werden. Sollte die Sichtseite nicht vollständig in den Matrixwerkstoff eingebettet sein, sondern oberflächig noch leicht strukturiert sein, kann dies ohne weiteres durch den abschließend aufzutragenden Lacküberzug ausgeglichen werden.

Im Rahmen einer ersten Erfindungsausgestaltung kann vorgesehen sein, dass die mit der Formmasse zu belegende Seite der formstabilen Textilstruktur vor dem Hinterspritzen strukturiert wird. Diese Strukturierung dient der Erhöhung der Kontaktfläche der Textilstruktur, die mit der eingespritzten Formmasse in Verbindung kommt, um die Haftung zu optimieren. Eine gewisse Strukturierung kann sich bereits aufgrund der geringen Menge an verwendetem Matrixwerkstoff ergeben, wenn nämlich der Matrixwerkstoff das Fasergewebe an der Oberfläche nicht vollständig einbettet. In jedem Fall ist eine mechanische Strukturierung, insbesondere durch Schleifen oder Sandstrahlen, also ein Aufrauen, zweckmäßig. Eine Alternative zum mechanischen Aufrauen ist darin zu sehen, wenn vor dem Einbetten der Textilstruktur in den Matrixwerkstoff ein Abreißgewebe (z.B. PA-Gewebe) aufgelegt wird, das über den Matrixwerkstoff ebenfalls fixiert wird, nach dem Aushärten aber von der formstabilen Textilstruktur abgerissen wird. Auch hierdurch ergibt sich eine hinreichende Oberflächenrauigkeit, die der Haftung förderlich ist.

Eine Alternative oder zusätzliche Möglichkeit zur Strukturierung der Oberfläche sieht vor, auf die formstabile Textilstruktur eine Kupplungsschicht aufzubringen, über die die eingespritzte Formmasse an die Textilstruktur angebunden wird. Es wird also eine der Haftung dienende Zwischenschicht vorgesehen. Bei dieser kann es sich beispielsweise um einen Sprühkleber mit thermoplastischen oder elastomeren Anteilen handeln, der auf die zu bespritzende Seite der Textilstruktur aufgesprüht wird. Alternativ ist es denkbar, als Kupplungsschicht eine thermoplastische Folie, die gegebenenfalls auf die bereits mechanisch, insbesondere über ein Abreißgewebe strukturierte Oberfläche aufgebracht wird, zu verwenden, wobei es hier zweckmäßig ist, diese thermoplastische Folie entsprechend der Form der Textilstruktur insbesondere in einem Tiefziehverfahren vorzuformen, um die Folienform optimal der Form der Textilstruktur anzupassen, so dass sie flächig eingelegt werden kann. Die Haftung der Folie wird noch dadurch verbessert, wenn die an der Textilstruktur anliegende Oberfläche der Folie durch eine Plasma- oder Coronaentladungsbehandlung verändert wird, das heißt, es wird hier mit einer Haftungsverbesserung durch elektrostatische Kopplung zwischen den zu verbindenden Teilen gearbeitet. Man kann hierdurch eine nahezu perfekte Verbindung der instabilen Folie mit der formstabilen Textilstruktur erreichen.

Die Herstellung der vorgeformten Textilstruktur kann auf unterschiedliche Weise erfolgen. Denkbar ist es, die formstabile Textilstruktur in einem Handlaminatverfahren zu bilden. Hierzu wird manuell das Flächengewebe in eine Vorform eingelegt und ausgerichtet, wonach der Matrixwerkstoff aufgebracht wird. Ferner besteht die Möglichkeit, in einem reinen vakuumgestützten Verfahren die Textilstruktur zu bilden. Hierbei wird ein Unterdruck an das mit dem Matrixwerkstoff, also z.B. dem Epoxidharz beschichtete Textilgewebe gelegt, der auf der anderen Seite herrschende Atmosphärendruck (Überdruck) unterstützt den Verpressvorgang. Alternativ ist auch die Herstellung der Textilstruktur in einem Autoklavenverfahren denkbar. Hierbei handelt es sich um ein vakuumgestütztes Verfahren, bei dem in einem Gefäß, üblicherweise einem Kessel, an das beschichtete Textilgewebe ein Vakuum und zusätzlich ein Überdruck zum Verpressen bzw. Formen des Textilgewebes angelegt wird. So kann eingeschlossene Luft aus dem Gewebe entfernt und gleichzeitig eine exakte Formung erreicht werden. Bei diesem thermisch unterstützten Verfahren kommen bevorzugt sog. "Prepreg" zu Einsatz. Dabei handelt es sich im erfindungsgemäßen Fall um mit einem vorzugsweise duroplastischen Harzsystem vorgetränkte Gewebe oder Gelege. Hauptsächlich werden Epoxidharze verwendet. Eine weitere Herstellungsalternative ist die Presstechnik, bei welcher das Gewebe-Prepreg zwischen zwei temperierbaren Werkzeughälften verpresst wird. Ferner kann als Pendant zur Autoklaventechnik auch die Pressklaventechnik angewendet werden. Hier wird das Gewebe-Prepreg in das üblicherweise beheizbare Werkzeug gelegt und mit einer Druckhaube verschlossen. Das einseitig mit Vakuum beaufschlagte Laminat, also das Textil-Prepreg, wird mittels einer Membran gegen das auf der anderen Seite anliegende Druckmedium, z.B. Druckluft abgeschirmt. Die Aushärtung des Matrixwerkstoffs, also des Harzes erfolgt über die Werkzeugbeheizung.

Eine weitere Möglichkeit sieht vor, die formstabile Textilstruktur in einem Injektionsverfahren, bei dem der Matrixwerkstoff (vorzugsweise ein Harz) gezielt in eine das Flächengewebe beinhaltende Form eingebracht wird, herzustellen. Zu nennen ist z.B. das RTM -(Resin-Transfer-Moulding) oder das vakuumunterstützte VRTM-(Vacuum-Assisted-Resin-Transfer-Moulding)-Verfahren. Hierbei werden keine vorgetränkte Gewebe oder Gelege (Prepregs) verwendet, vielmehr wird das zu bearbeitende trockene Textilgewebe, also z.B. das Kohlefasergewebe in ein Werkzeug gelegt und das Harz und der Härter in einem separaten Prozess über eine Pumpe in das temperierbare Werkzeug eingespritzt und damit das Textilgewebe imprägniert. Eine weitere Möglichkeit zur Herstellung der Textilstruktur sieht schließlich die Verwendung einer in einem thermoplastischen Matrixwerkstoff eingebetteten textilen Flächengebildes vor, dass in einem Thermoverformungsverfahren unter temporärer Erweichung des Matrixwerkstoffs hergestellt wird. Es wird hier also mit einem bei Raumtemperatur formstabilen Ausgangsmaterial gearbeitet, das bei Erwärmung erweicht und geformt wird, wonach es in der gewünschten Form wieder erkaltet.

Zur Formanpassung der formstabilen Textilstruktur wird diese zweckmäßigerweise vor dem Einlegen in das Spritzwerkzeug zumindest randseitig bearbeitet, insbesondere beschnitten, was bevorzugt durch randseitiges Abfräsen über eine CNC-Maschine oder durch Wasserstrahlschneiden oder Laserbeschnitt erfolgen kann. Zweckmäßig ist es dabei, die bearbeiteten Randkanten beim Hinterspritzen zu umspritzen, wodurch zum einen die bearbeiteten Randkanten versiegelt werden, zum anderen bildet die hierbei geformte Hinterschneidung eine formschlüssige Verbindung, die der gesamten Fixierung der Verbindung der Textilstruktur mit Formmasse zuträglich ist.

Als textile Flächengebilde sind alle gängigen Faserwerkstoffe wie Kohlenstoff-, Aramid-, Polyester- oder Glasgewebe (mit Beschichtung) aber auch Gelege oder Vliesstoffe verwendbar, auch Metallgewebe oder dergleichen können verwendet werden. Als Matrixwerkstoffe zur Bildung der vorfixierten Textilstruktur kommen bevorzugt duroplastische Harze oder Harzsysteme wie Epoxydharz, Vinylesterharz oder Polyesterharz in vorzugsweise transparenter Form zum Einsatz, denkbar sind aber auch thermoplastische Harzsysteme oder verflüssigbare Metalle. Als Lack, der über die Sichtseite der bereits hinterspritzten Textilstruktur, die aufgrund der Herstellung bereits eine sehr glatte Oberfläche aufweist, sehr dünn aufgebracht wird und der die Oberfläche versiegelt und optisch aufwertet, können vorwiegend Kunstharz-Zweikomponenten-Lacksysteme auf Polyurethan- oder Polyesterbasis verwendet werden. Auch Gießsysteme oder thermoplastische Lacksysteme können zum Einsatz kommen.

Sofern eine Kupplungsschicht unter Verwendung einer tiefziehfähigen Folie zum Einsatz kommt, werden bevorzugt Folien aus Polycarbonat, Polyurethan, Polyamid, Hart-PVC, Weich-PVC oder Polyethylen verwendet.

Als Spritzmasse sind ebenfalls unterschiedliche Kunststoffmassen, sofern diese in einem Spritzgießverfahren verarbeitet werden können, verwendbar. Zu nennen sind hier ABS-Copolymere, geeignet sind aber auch Polycarbonat-, Polyamid- oder andere Thermoplast-Systeme oder Polyurethan-Systeme. Wird anstatt eines herkömmlichen Spritzgussprozesses ein PU-RIM-Verfahren eingesetzt, sind auch Polyurethane als Hinterspritzmaterial denkbar, wie auch Metalle, die in einem Metallgussdruckverfahren verarbeitet werden können, Verwendung finden. Die Wahl des verwendeten Spritzgutes richtet sich letztlich zum einen nach dem verwendeten Spritzverfahren, schließlich aber auch danach, welche anderen Materialien, insbesondere welcher Matrixwerkstoff und gegebenenfalls welche Kupplungsfolie verwendet wird. Die verwendeten Werkstoffe sollten dabei so gewählt werden, dass ihre Ausdehnungskoeffizienten möglichst ähnlich sind, um thermische Einflüsse zu vermeiden.

Die verwendeten Formmassen zum Hinterspritzen können schäumend sein. Durch den Einsatz von geschäumten Werkstoffen lassen sich bis zu 25 % Gewichtsersparnis realisieren, wobei Formmassen verwendet werden können, die physikalisch aufgeschäumt werden, bei denen also das Gas direkt in die Polymerschmelze eingebracht wird, oder die chemisch aufschäumen, bei denen das Gas also beim Plastifiziervorgang entsteht. Insbesondere im Hinblick auf das Erfordernis von Automobilherstellern zur Gewichtsreduktion ist die Verwendung schäumender oder aufgeschäumter Formmassen von besonderem Vorteil.

Insgesamt lässt das erfindungsgemäße Verfahren die einfache und kostengünstige, optisch äußerst ansprechende und im Hinblick auf die Form- und Maßhaltigkeit äußerst exakte Herstellung von überzogenen Gegenständen zu, wobei die Gegenstände infolge der untrennbaren Verbindung der Textilstruktur mit der hinterspritzten Trägermasse hervorragende mechanische Eigenschaften besitzt.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: ein Flussdiagramm zur Darstellung der Herstellung der formstabilen Textilstruktur,

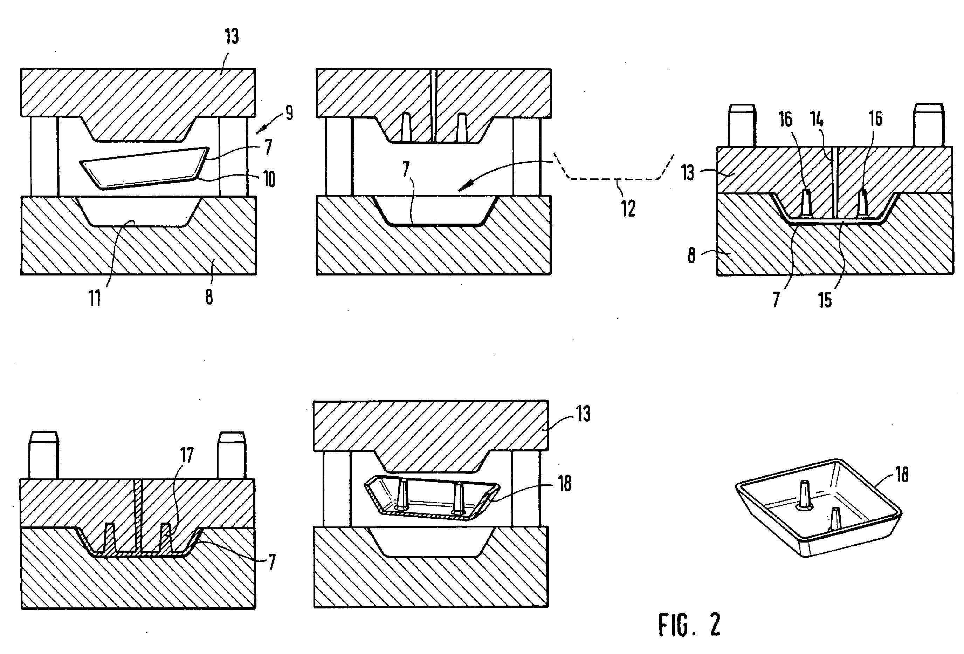

- Fig. 2: ein Flussdiagramm zur Darstellung der Herstellung des fertig gespritzten Gegenstands, und
- Fig. 3: eine Schnittansicht durch einen erfindungsgemäß hergestellten Gegenstand mit vergrößerter Detailansicht im Kantenbereich.

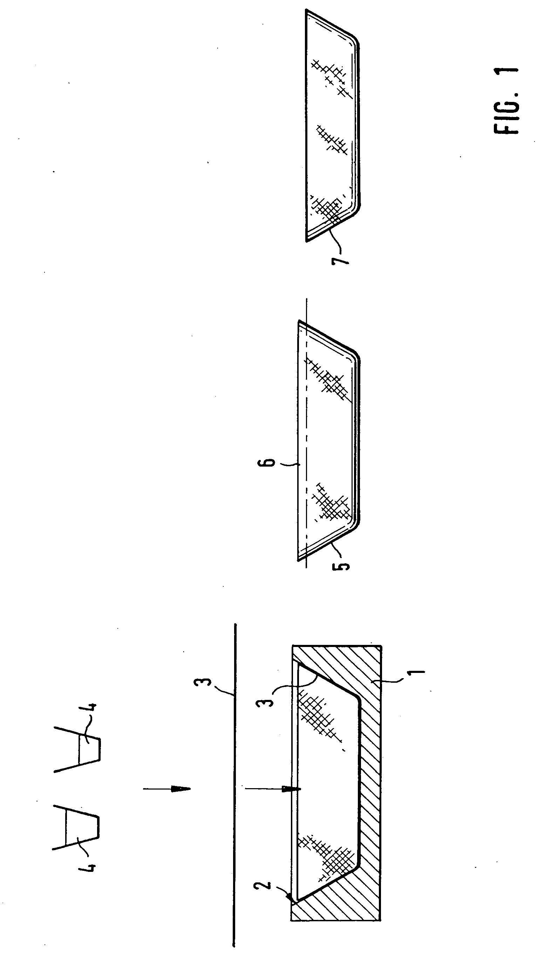

Fig. 1 zeigt in Form einer Prinzipdarstellung den verfahrensgemäßen Ablauf zur Herstellung der vorgefertigten, formstabilen Textilstruktur unter Verwendung eines Laminierwerkzeugs. In das Laminierwerkzeug 1, dessen Innenseite 2 exakt der Form und Oberflächengeometrie des fertig hergestellten Gegenstands entspricht, wird zunächst manuell oder maschinell ein textiles Flächengewebe 3, beispielsweise eine Kohlenfaserverbundstruktur, die flexibel ist, an allen Flächen des Laminierwerkzeugs bündig anliegend eingelegt. Gezeigt ist nur eine Lage, es können aber auch mehrere Lagen eingelegt werden. Die verwendete Anzahl ist bauteilabhängig. Anschließend wird der Matrixwerkstoff 4, bei dem es sich gegebenenfalls um einen zweikomponentigen Werkstoff handeln kann, zugeführt, um die Fasern des Flächengewebes in ihrer Lage zu fixieren und auf diese Weise eine formstabile Textilstruktur zu bilden, die nach dem Aushärten des Matrixwerkstoffs dem Laminierwerkzeug 1 entnommen wird. Die in der mittleren Darstellung gezeigte formstabile Textilstruktur 5 entspricht in ihrer Form exakt der Werkzeuggeometrie. Die obere Kante 6 ist die Beschnittkante, diese wird beispielsweise in einem Fräsprozess abgenommen, so dass sich die in Fig. 1 rechts gezeigte beschnittene, formstabile Textilstruktur 7 bestehend aus dem im Matrixwerkstoff fixierten textilen Flächengewebe 3 ergibt.

Diese Textilstruktur 7 wird anschließend ebenfalls manuell oder maschinell in das Werkzeugunterteil 8 eines Spritzwerkzeugs 9 eingelegt, wobei die Werkzeugkavität 11 exakt der Form der Sichtseite oder Außenseite 10 der formstabilen Textilstruktur 7 entspricht. Dabei bildet die Anlagefläche zwischen der Textilstruktur 7 und der Dichtfläche des Werkzeugs 9 eine Sperre für das einzuspritzende Material. Entscheidend ist die optimale Passgenauigkeit der zu hinterspritzenden Textilstruktur zu der Oberfläche 11 der Kavität bei der zu erwartenden Prozesstemperatur.

Diese Passgenauigkeit kann auf unterschiedliche Weise erstellt werden. Zum einen ist es möglich, die Spritzgusswerkzeug-Oberfläche und das Modell für das Textilstruktur-Werkzeug auf demselben Bearbeitungszentrum in einem CNC-Verfahren zu fräsen, noch bevor das Spritzgusswerkzeug zum Einsatz kommt. Somit wird sichergestellt, dass keine Bearbeitungseinflüsse von unterschiedlichen Maschinen das Ergebnis der Werkzeuganpassung verfälschen. Alternativ ist es möglich, einen Abguss des bereits einsatzfähigen Spritzgusswerkzeugs mittels Kunstharzmaterials, das eine geringe Schrumpfung besitzt, zu erstellen. Dieser Abguss wird anschließend mittels Datenrückführung in ein CAD-Modell umgewandelt und dann im CNC-Fräsprozess in ein Textilstruktur-Werkzeug kopiert. Die Textilstruktur muss dann in dem dazugehörigen Werkzeug bei derselben Prozesstemperatur hergestellt werden, bei der später spritzgegossen wird. Dies ist notwendig, da das Textilstruktur-Bauteil nur dann passgenau ist, wenn es im Werkzeug, das bei der Prozesstemperatur eine gewisse Ausdehnung hat, aushärtet und somit diese Ausdehnung "eingefroren" wird. Die im Härtungsprozess erzeugte minimale Übergröße der Schale muss exakt zu der temperaturabhängigen Übergröße des im Einsatz befindlichen Spritzgusswerkzeugs, hervorgerufen durch den Ausdehnungskoeffizienten des Werkzeugmaterials, passen, um eine optimale Abdichtwirkung zu erzielen.

Nach dem Einlegen der Textilstruktur kann, wie hier gestrichelt dargestellt ist, eine Kupplungsschicht in Form einer tiefgezogenen Folie 12 in die schalenförmige Textilstruktur 7 eingelegt werden, die der Verbesserung der Haftung der eingespritzten Formmasse an der Textilstruktur 7 dient. Sofern auf eine Kupplungsschicht verzichtet wird, sollte die zu bespritzende Fläche der Textilstruktur 7 vor dem Einlegen in das Werkzeug 9 mechanisch aufgeraut werden, um die Oberfläche zur Verbesserung der Haftung der Formmasse zu vergrößern.

Nachfolgend wird das Werkzeugoberteil 13 zugefahren und verriegelt, die Form ist damit geschlossen. Am Werkzeugoberteil 13 ist der Einspritzkanal 14 für die Formmasse dargestellt, ersichtlich ist auch der Raum 15, der mit der Formmasse im Anschluss an die Textilstruktur 7 auszuspritzen ist. Gezeigt sind ferner zwei Ausnehmungen 16, die zur Ausbildung von integralen Befestigungselementen mittels der eingespritzten Formmasse dienen.

Im nächsten Schritt wird die verflüssigte, temperierte Spritzgieß-Formmasse eingespritzt und benetzt vollständig die Textilstruktur 7 bzw. die dünne aufgelegte und infolge der Temperatur der Formmasse aufschmelzende oder erweichende Folie 12, sofern eine solche vorhanden ist. Ersichtlich füllt die Formmasse 17 auch die der Ausbildung von Befestigungselementen dienenden Räume 16 aus. Die Prozessparameter, also Spritzdruck, Spritztemperatur etc. müssen individuell an die Werkstoffe der Textilstruktur sowie die Eigenschaften der verwendeten Formmasse wie auch die Bedürfnisse des Spritzgussprozesses angepasst werden. Beim Einspritzen der Formmasse 17 erweicht die gegebenenfalls eingelegte Folie 12 und passt sich bedingt durch den Spritzdruck optimal dem jeweiligen Flächenverlauf an. Der beim Prozess vorhandene materialabhängige Einspritzdruck oder Injektionsdruck presst die Formmasse 17 gegen die Textilstruktur 7 bzw. die Folie 12 und erzeugt den nötigen Flächendruck, der zum Abdichten der Textilstruktur 7 zur Werkzeugoberfläche gegen die verflüssigte Formmasse dient. Die Formmasse kann unter Verwendung von kurzen Glasfasern, Carbonfasern oder dergleichen faserverstärkt sein.

Nach dem Erkalten der Formmasse wird das Werkzeugoberteil 13 wieder nach oben gefahren, wonach der fertig gespritzte Gegenstand 18 entformt werden kann. Das Textilgewebe überzieht die äußere Sichtseite des Gegenstandes vollständig ohne die Optik beeinträchtigende Verwerfungen, Verziehungen etc. Anschließend wird gegebenenfalls auf die Sichtseite der Sichtlack aufgetragen, wonach diese Seite sofern erforderlich noch geschliffen und poliert wird.

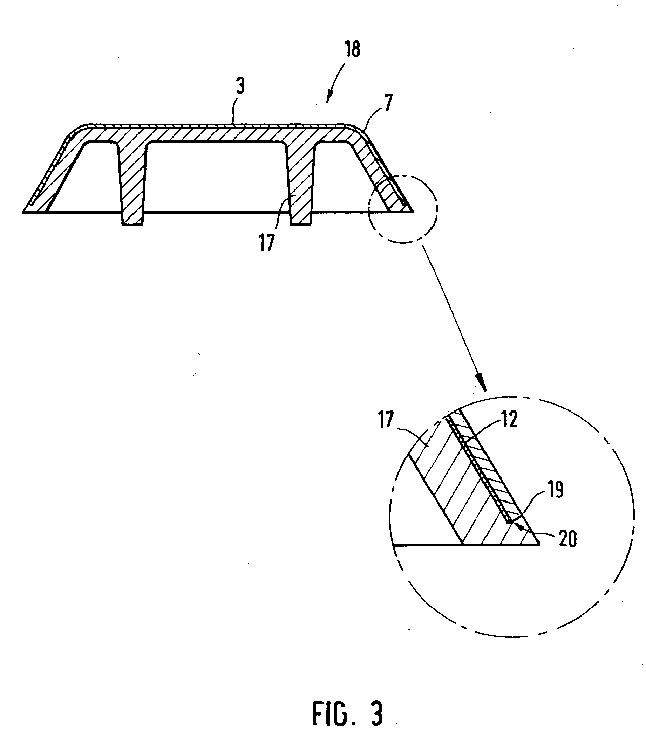

Fig. 3 zeigt einen Schnitt durch einen derart hergestellten Gegenstand 18. Dieser besteht ersichtlich aus der formstabilen Textilstruktur 7 mit dem eingebundenen Textilgewebe 3 und der in der Detailansicht erkennbaren Kupplungsschicht aus der Folie 12, die mit der ausgehärteten Formmasse 17 belegt ist.

Wie der Detailansicht zu entnehmen ist, wurde die Kante 19 der Textilstruktur 7 mit Formmasse 17 umspritzt, das heißt, es bildet sich im Randbereich ein Hinterschnitt 20 aus, über den ein zusätzlicher Formschluss von schalenartiger Textilstruktur und dem hinterspritzten Träger erzielt wird.

Die oben beschriebene Vorgehensweise ist lediglich exemplarisch. Wie beschrieben kann die Herstellung der Trägerstruktur 7 in anderen Verfahren erfolgen. Die verwendeten Spritzgießwerkzeuge können auch in der Ausführung der Werkzeugober- und -unterteile auch mehrteilig ausgeführt sein, sofern dies abhängig von der dreidimensionalen Oberfläche und Geometrie des Gegenstandes realisiert werden kann bzw. technisch notwendig ist. Sofern erforderlich, wird zwischen die vorgefertigte Textilstruktur und die Spritzwerkzeugfläche eine Dichtung eingelegt, um ein Umfliesen der Textilstruktur mit dem Spritzmaterial zu verhindern.

## Patentansprüche

1. Verfahren zur Herstellung eines formstabilen, mit einem textilen Flächengebilde, insbesondere einer Faserverbundstruktur überzogenen Gegenstands, **dadurch gekennzeichnet, dass** anhand wenigstens eines textilen Flächengebildes und einem aushärtbaren Matrixwerkstoff eine dünne formstabile Textilstruktur gebildet wird, die anschließend mit einer aushärtenden Formmasse in einem Spritzgussverfahren hinterspritzt wird.

2. Verfahren nach Anspruch 1, **dadurch gekennzeichnet, dass** die Dicke der formstabilen Textilstruktur im Wesentlichen der Dicke des ein- oder mehrlagigen Flächengebildes entspricht.

3. Verfahren nach Anspruch 1 oder 2, **dadurch gekennzeichnet, dass** die mit der Formmasse zu belegende Seite der formstabilen Textilstruktur vor dem hinterspritzen strukturiert wird.

4. Verfahren nach Anspruch 3, **dadurch gekennzeichnet, dass** die Textilstruktur mechanisch, insbesondere durch Schleifen oder Sandstrahlen aufgeraut wird.

5. Verfahren nach Anspruch 3, **dadurch gekennzeichnet, dass** vor dem Einbetten der Textilstruktur ein Abreißgewebe aufgelegt wird, das nach dem Aushärten des Matrixwerkstoffs von der formstabilen Textilstruktur abgerissen wird.

6. Verfahren nach einem der vorangehenden Ansprüche, **dadurch gekennzeichnet, dass** auf die formstabile Textilstruktur eine Kupplungsschicht aufgebracht wird, über die die eingespritzte Formmasse an die Textilstruktur angebunden wird.

7. Verfahren nach Anspruch 6, **dadurch gekennzeichnet, dass** die Kupplungsschicht ein Sprühkleber mit wenigstens einer thermoplastischen oder elastomeren Komponente ist.

8. Verfahren nach Anspruch 6, **dadurch gekennzeichnet, dass** die Kupplungsschicht eine thermoplastische Folie ist.

9. Verfahren nach Anspruch 8, **dadurch gekennzeichnet, dass** die thermoplastische Folie entsprechend der Form der Textilstruktur insbesondere in einem Tiefviehverfahren vorgeformt wird.

10. Verfahren nach Anspruch 8 oder 9, **dadurch gekennzeichnet, dass** die an der Textilstruktur anliegende Oberfläche der Folie durch eine Plasma- oder Coronabehandlung verändert wird.

11. Verfahren nach einem der vorangehenden Ansprüche, **dadurch gekennzeichnet, dass** die formstabile Textilstruktur in einem Handlaminatverfahren, einem Autoklavenverfahren oder einem Pressklavenverfahren hergestellt wird.

12. Verfahren nach einem der Ansprüche 1 bis 10, **dadurch gekennzeichnet, dass** die formstabile Textilstruktur in einem Injektionsverfahren, bei dem der Matrixwerkstoff injiziert wird, hergestellt wird.

13. Verfahren nach einem der Ansprüche 1 bis 10, **dadurch gekennzeichnet, dass** die formstabile Textilstruktur unter Verwendung einer in einem thermoplastischen Matrixwerkstoff eingebetteten textilen Flächengebildes in einem Thermoverformungsverfahren unter temporärer Erweichung des Matrixwerkstoffs hergestellt wird.

14. Verfahren nach einem der vorangehenden Ansprüche, **dadurch gekennzeichnet, dass** die formstabile Textilstruktur vor dem Einlegen in das Spritzwerkzeug zumindest randseitig bearbeitet, insbesondere beschnitten wird.

15. Verfahren nach Anspruch 14, **dadurch gekennzeichnet, dass** die Textilstruktur randseitig abgefräst oder mittels Wasserstrahl oder Laserstrahl bearbeitet wird.

16. Verfahren nach Anspruch 14 oder 15, **dadurch gekennzeichnet, dass** die bearbeiteten Randkanten beim Hinterspritzen umspritzt werden.

17. Verfahren nach einem der vorangehenden Ansprüche, **dadurch gekennzeichnet, dass** als Formmasse eine schäumende Formmasse verwendet wird.

18. Verfahren nach einem der vorangehenden Ansprüche, **dadurch gekennzeichnet, dass** die Formmasse einen verstärkenden Faseranteil, insbesondere Glasfasern oder Carbonfasern aufweist.

19. Verfahren nach einem der vorangehenden Ansprüche, **dadurch gekennzeichnet, dass** die Ausdehnungskoeffizienten des Matrixwerkstoffs, der Formmasse und gegebenenfalls der die Kupplungsschicht bildenden Folie aufeinander abgestimmt sind.

20. Verfahren nach einem der vorangehenden Ansprüche, **dadurch gekennzeichnet, dass** mehrere zumindest teilweise in ihren Ausdehnungskoeffizienten unterschiedliche Flächengebilde übereinandergelegt und mit dem Matrixwerkstoff zu der formstabilen Textilstruktur gebildet werden, die im wesentlichen gerichtet vorgespannt ist, derart, dass ein nach dem Hinterspritzen aus dem Ausdehnungskoeffizienten der Formmasse resultierender Verzug des Gegenstands zumindest teilweise kompensiert wird.

21. Verfahren nach Anspruch 20, **dadurch gekennzeichnet, dass** Flächengebilde aus Fasern unterschiedlicher Materialien oder unterschiedlicher Faserdicke verwendet werden.

22. Mit einem textilen Flächengebilde, insbesondere einer Faserverbundstruktur überzogener Gegenstand, hergestellt nach dem Verfahren nach einem der vorangehenden Ansprüche.
